# EUROPÄISCHE PATENTSCHRIFT

(11) **EP 4 114 590 B1**
(45) Veröffentlichungstag und Bekanntmachung des Hinweises auf die Patenterteilung: **30.07.2025**
(21) Anmeldenummer: 21714799.0
(22) Anmeldetag: 02.03.2021
(51) Int. Cl.: B21D 43/14, B65G 47/248, B65H 15/00

(54) **VORRICHTUNG UND VERFAHREN ZUM WENDEN VON BLECHEN**
DEVICE AND METHOD FOR TURNING METAL SHEETS
DISPOSITIF ET PROCÉDÉ POUR RETOURNER DES TÔLES

(30) Priorität: 03.03.2020 AT 501572020
(43) Veröffentlichungstag der Anmeldung: 11.01.2023
(73) Patentinhaber: TRUMPF Maschinen Austria GmbH & Co. KG., 4061 Pasching (AT)
(72) Erfinder: GRASSL, Rainer, 4061 Pasching (AT); KREISBICHLER, Daniel, 4631 Krenglbach (AT); KURCZ, Martin, 4491 Niederneukirchen (AT); LANG, Maximilian, 4040 Linz (AT); LEHNER, Herbert, 4710 Grieskirchen (AT); MAYRHOFER, Albert, 4511 Allhaming (AT); REISINGER, Johannes, 4680 Haag am Hausruck (AT); RICHTER, Stefan, 4060 Leonding (AT); WEISS, Thomas, 4062 Kirchberg-Thening (AT); WESELY, Karin, 4060 Leonding (AT)
(74) Vertreter: Burger, Hannes
(86) Internationale Anmeldenummer: PCT/AT2021/060070
(87) Internationale Veröffentlichungsnummer: WO 2021/174274

(56) Entgegenhaltungen:
- WO-A1-2020/187481
- CN-A- 107 915 029
- CN-A- 109 264 393
- CN-A- 110 654 832
- CN-A- 111 421 068
- DE-B3- 102004 057 105
- JP-A- S55 128 334
- JP-B2- S5 935 697
- JP-U- S63 157 436
- US-A1- 2018 201 451

## Beschreibung

Die Erfindung betrifft eine Blechbearbeitungsanlage mit einem Fördermittel zum Fördern eines Werkstückes und eine Wendeinheit zum Wenden des Werkstückes, sowie ein Verfahren zum Wenden von Blechen für eine Blechbearbeitungsanlage.

Wendevorrichtungen zum Wenden von Werkstücken sind grundsätzlich bekannt. Die DE102004057105 B3 beschreibt eine Wendevorrichtung zum Wenden von Werkstücken zwischen Bearbeitungsstationen, insbesondere für Pressenstationen. Darin sind zwei Werkstückträger vorgeschlagen, welche mit einer Antriebseinrichtung gekoppelt sind und je eine Haltefläche aufweisen. Mithilfe der Antriebseinrichtung sind die Werkstückträger von einer Ausgangsstellung in eine Übergabestellung verschwenkbar ausgebildet, um das Werkstück somit von einen Werkstückträger zum anderen zu verschwenken. Weiters ist eine Transfereinrichtung ausgebildet, welche die Ablage bzw. Aufnahme der Werkstücke auf bzw. von der Wendeeinrichtung durchführt.

Die aus der DE102004057105 B3 bekannte Vorrichtung weist den Nachteil auf, dass ein eigener Manipulator bereitgestellt werden muss, um das Werkstück von einer Pressenstation zu der Wendeeinheit zu fördern und zwischen den Werkstückträgern beim Wenden auch noch verfahren wird.

Weiters werden im Stand der Technik auch Bleche aufwändig mithilfe von zusätzlichen Fördermitteln und Mehrachsrobotern gewendet.

Die CN107915029 A, auf welche der Oberbegriff der unabhängigen Patentansprüche 1 und 8 basiert, offenbart eine Wendeeinheit, wobei die Wendeeinheit einen Manipulator umfasst, welcher Manipulator dazu ausgebildet ist, die Unterseite des Werkstückes von der Aufnahmefläche abzuheben, einen Wendevorgang des Werkstückes durchzuführen und die Oberseite des Werkstückes auf die Aufnahmefläche des Fördermittels abzulegen, wobei zum Wenden die komplette Wendeeinheit um 180° gedreht wird.

Zudem ist es bekannt, bei Fördervorrichtungen einer Blechbearbeitungsanlage das Fördermittel drehbar um die Förderrichtung auszubilden, was jedoch zu fehlerhaften Werkstückausrichtungen und Beschädigungen führen kann.

Aufgabe der vorliegenden Erfindung war es, die Nachteile des Standes der Technik zu überwinden und eine verbesserte Vorrichtung, bzw. ein verbessertes Verfahren zum Wenden von Blechen zur Verfügung zu stellen, worin mit einfachen Mitteln und geringen Platzaufwand ein Wendevorgang durchgeführt werden kann.

Diese Aufgabe wird durch eine Vorrichtung und ein Verfahren gemäß den Ansprüchen gelöst.

Erfindungsgemäß ist eine Blechbearbeitungsanlage mit einer Wendeeinheit ausgebildet. Die Blechbearbeitungsanlage umfasst:
- ein Fördermittel, welches Fördermittel in einer Förderebene eine Aufnahmefläche für ein Werkstück und eine Förderrichtung definiert, und zum Fördern eines des Werkstückes ausgebildet ist, welches Werkstück eine Unterseite und eine Oberseite aufweist;
- eine Wendeeinheit, welche Wendeeinheit zum Wenden des auf der Aufnahmefläche aufgenommenen Werkstückes von der Unterseite auf die Oberseite ausgebildet ist,
wobei weiters noch vorgesehen ist, dass die Wendeeinheit einen Manipulator umfasst, welcher Manipulator dazu ausgebildet ist, die Unterseite des Werkstückes von der Aufnahmefläche abzuheben, einen Wendevorgang des Werkstückes durchzuführen und die Oberseite des Werkstückes auf die Aufnahmefläche des Fördermittels abzulegen.

Diese Erfindungsgemäße Ausbildung weist den Vorteil auf, dass ein Werkstück mit einfachen Mitteln präzise, schonend, platzsparend und vor allem in kurzer Zeit auf dem Fördermittel gewendet wird, um dann das Werkstück wieder einem Prozess der Blechbearbeitungsanlage zuzuführen und somit kurze Taktzeiten ermöglicht werden.

Ein zusätzlicher Vorteil besteht darin, dass aufgrund der einfachen Ausführung der Wendeeinheit Betriebskosten eingespart werden können.

Weiteres wird aufgrund der erfindungsgemäßen Ausbildung der Wendeeinheit deren Gefahrenbereich möglichst klein ausgebildet, wodurch ein höherer Sicherheitsfaktor gewährleistet ist.

Zur Vollständigkeit sei hierbei erwähnt, dass es sich bei der genannten Ober- und Unterseite um die momentan auf dem Fördermittel aufgenommene Fläche des Bleches bezüglich eines folgenden Wendevorgangs handelt und diese bei einem erneuten Wendevorgang wieder von einer Unterseite auf eine Oberseite des Werkstücks gewendet wird.

Weiters kann vorgesehen sein, dass zumindest Bestandsteile des Fördermittels derart verschiebbar ausgebildet sind, dass in der Förderebene eine Zugangsöffnung für den Manipulator ausbildbar ist. Durch diese Maßnahme können Bereiche oder zusätzliche Vorrichtungen der Wendeinheit oder auch ein Speicher platzsparend und schnell für den Manipulator zugänglich gemacht werden.

Gemäß einer Weiterbildung kann der Manipulator eine Greifvorrichtung umfassen, welche Greifvorrichtung dazu ausgebildet ist, das Werkstück an der Oberseite mit einer Greiffläche zu erfassen. Das Erfassen an der Oberseite weist den Vorteil auf, dass erforderliche Greifkräfte optimal auf das Werkstück verteil werden können, um Beschädigungen und ähnliche unerwünschte Effekte zu vermeiden.

Weiters vorteilhaft kann es sein, wenn ein Teil des Manipulators oder eine Greifvorrichtung entlang einer Achse verschiebbar oder telekopierbar ausgeführt ist. Dies ermöglicht eine zusätzlich verbesserte Anpassbarkeit an die Werkstückgeometrie. Zudem kann diese Maßnahme den das Ablegen oder Aufnehmen des Werkstücks prozesssicherer gestalten.

Vorteilhaft kann es sein, wenn der Manipulator eine Greifvorrichtung umfasst, welche dazu ausgebildet ist, das Werkstück an zwei einander gegenüberliegenden Werkstückenden randseitig zu erfassen. Durch diese Maßnahme kann die Greifvorrichtung besonders einfach auf unterschiedliche Werkstückabmessungen angepasst werden.

Zum besseren Verständnis sei hierbei erwähnt, dass mit dem Begriff "randseitig" ein flächiger Bereich im Umfangs-Randbereich des Werkstücks gemeint ist, welcher an der Ober- oder Unterseite des Werkstücks ausgebildet ist und abhängig von der Ausrichtung des Manipulators z.B. parallel bezüglich der Förderrichtung oder orthogonal bezüglich der Förderrichtung ausgerichtet sein kann.

Ferner kann es vorgesehen sein, dass die Greifvorrichtung zumindest einen Wendekopf umfasst, welcher Wendekopf zumindest um 180° schwenkbar ausgebildet ist. Somit kann ein Schwenken der Greifvorrichtung mit dem Werkstück erreicht werden, wodurch ein schneller Wendevorgang auf kleinstem Raum erfolgen kann.

Vorteilhaft kann es sein, wenn der Manipulator um eine Schwenkachse schwenkbar ausgebildet ist, welche Schwenkachse parallel bezüglich der Förderrichtung angeordnet ist. Hierdurch kann sowohl das Anheben des Werkstücks, das Wenden als auch das Ablegen um eine einzige Achse erfolgen

Weiters vorteilhaft kann es sein, wenn der Manipulator um eine Achse schwenkbar ausgebildet ist, welche Achse parallel bezüglich der Förderebene und orthogonal bezüglich der Förderrichtung angeordnet ist. Zum einen bringt dies wiederum den Vorteil mit sich, das Anheben, Wenden und Ablegen um eine Achse zu ermöglichen, aber auch das Bauteil um eine Achse orthogonal bezüglich der Förderrichtung zu wenden, falls dies erforderlich ist.

Weiters ist vorgesehen, dass der Manipulator eine erste Greifvorrichtung und eine zweite Greifvorrichtung umfasst, welche dazu ausgebildet sind, das Werkstück während des Wendevorgangs von der ersten Greifvorrichtung auf die zweite Greifvorrichtung zu übergeben. Mittels dieser Ausgestaltung ist es möglich, das Werkstück auf einfache Weise prozesssicher zu wenden, indem das Werkstück von der ersten bzw. zweiten Greifvorrichtungen an der Ober- bzw. Unterseite flächig erfasst werden kann.

Weiters ist ein Verfahren zum Wenden von Blechen für eine Blechbearbeitungsanlage vorgesehen, umfassend folgende Schritte;
- Bereitstellen einer Blechbearbeitungsanlage,
   Bereitstellen eines Fördermittels, welches Fördermittel in einer Förderebene eine Aufnahmefläche für ein Werkstück und eine Förderrichtung definiert, und zum Fördern des Werkstückes ausgebildet ist, welches Werkstück eine Unterseite und eine Oberseite aufweist,
- Bereitstellen eines Werkstücks auf der Aufnahmefläche des Fördermittels,
- Bereitstellen einer Wendeeinheit, welche Wendeeinheit zum Wenden des auf der Aufnahmefläche aufgenommen Werkstückes von der Unterseite auf die Oberseite ausgebildet ist, wobei die Wendeeinheit einen Manipulator umfasst, welcher die Unterseite des Werkstückes von der Aufnahmefläche abhebt, einen Wendevorgang des Werkstückes durchführt und die Oberseite des Werkstückes auf die Aufnahmefläche des Fördermittels ablegt.

Durch das erfindungsgemäße Verfahren ist es möglich, Bleche, welche bei einer Blechbearbeitungsanlage auf einem Fördermittel platziert werden, schnell und einfach zu wenden, um kurze Taktzeiten zu ermöglichen und Bauraum einzusparen.

Ferner kann es vorteilhaft sein, wenn zumindest ein Speicher bereitgestellt wird, welcher unterhalb der Förderebene des Fördermittels positioniert ist. Dies bringt den Vorteil mit sich, dass Bleche nach den Bearbeitungsprozessen auch von der Wendeeinheit abgelegt oder zwischengelagert werden können, oder auch erstmalig vor den Prozessen dort entnommen werden können. Andernfalls können auch beschädigte bzw. fehlerhafte Werkstücke dort abgelegt werden. Weiters kann der Speicher auch ein Lager für Teile des Manipulators, bzw. der Wendeeinheit bilden.

Darüber hinaus kann vorgesehen sein, dass im Fördermittel eine Zugangsöffnung für den Manipulator in der Förderebene ausgebildet wird, und dabei zumindest Bestandsteile des Fördermittels verschoben werden. Durch diese Maßnahme können Bereiche oder zusätzliche Vorrichtungen der Wendeinheit oder auch ein Speicher platzsparend und schnell für den Manipulator zugänglich gemacht werden

Weiteres vorteilhaft kann sein, wenn das Bereitstellen des Werkstückes mittels des Manipulators erfolgt, wobei das Werkstück mittels des Manipulators vom Speicher abgehoben und auf die Aufnahmefläche des Fördermittels abgelegt wird. Dies bringt den Vorteil mit sich, dass auf eine zusätzliche Fördervorrichtung, welche die Bleche erstmalig der Blechbearbeitungsanlage zuführt, verzichtet werden kann.

Vorteilhaft kann auch sein, wenn der Manipulator eine Greifvorrichtung mit einer Greiffläche umfasst und das Werkstück an der Oberseite mit der Greiffläche erfasst wird. Das Erfassen an der Oberseite weist den Vorteil auf, dass erforderliche Greifkräfte optimal auf das Werkstück verteil werden können, um Beschädigungen und ähnliche unerwünschte Effekte zu vermeiden.

Zudem kann vorgesehen sein, dass der Manipulator eine Greifvorrichtung umfasst, und das Werkstück von der Greifvorrichtung an zwei einander gegenüberliegenden Werkstückenden randseitig erfasst wird. Durch diese Maßnahme kann erreicht werden, dass unterschiedliche Geometrien von Werkstücken mit derselben Greifvorrichtung möglichst einfach erfasst werden können.

Darüber hinaus kann es von Vorteil sein, wenn die Greifvorrichtung zumindest einen Wendekopf umfasst, welcher zumindest um 180° schwenkbar ausgebildet ist und die Greifvorrichtung mit dem Werkstück im Wendevorgang zumindest teilweise um eine Wendeachse gewendet wird. Durch diese Maßnahme kann ein schneller Wendevorgang auf kleinstem Raum erfolgen.

Gemäß einer Weiterbildung ist es möglich, dass der Manipulator weiters Mittel umfasst, mittels derer eine Haltekraft der Greifvorrichtung während des Wendevorgangs zumindest reduziert wird und dass bei reduzierter Haltekraft das Werkstück beim Ablegen auf die Aufnahmefläche des Fördermittels von der Greifvorrichtung gleitet. Hierdurch kann das Werkstück bereits in Richtung der Aufnahmefläche gleiten, während der Wendevorgang stattfindet. Dies kann zu einer zusätzlichen Zeitersparnis führen.

Bei einem Saug- oder Vakuumgreifer können diese Mittel beispielsweise einer Druckluftsteuerung, bzw. Unterdruckregelung umfassen, sowie bei einem Magnetgreifer eine Regelung des Magnetfeldes, bzw. auch pneumatisch, im Falle eines Dauermagneten. Alternativ kann die Haltekraft auch deaktiviert werden, was eine vereinfachte Steuerung erlauben würde.

Weiters ist vorgesehen, dass der Manipulator eine erste Greifvorrichtung und eine zweite

Greifvorrichtung umfasst, wobei mittels der ersten Greifvorrichtung die Unterseite des Werkstückes von der Aufnahmefläche abgehoben wird und ein erster Teilschritt des Wendevorganges durchgeführt wird, das Werkstück von der ersten Greifvorrichtung an die zweite Greifvorrichtung übergeben und von dieser angenommen wird, ein zweiter Teilschritt des Wendevorganges durchgeführt wird und die Oberseite des Werkstückes mittels der zweiten Greifvorrichtung auf die Aufnahmefläche des Fördermittels abgelegt wird. Mittels dieser Ausgestaltung ist es möglich, das Werkstück auf einfache Weise prozesssicher zu wenden, indem das Werkstück z.B. von der ersten bzw. zweiten Greifvorrichtungen an der Ober- bzw. Unterseite flächig erfasst werden kann.

Weiters vorteilhaft kann es sein, wenn Teile des Manipulators oder der Greifvorrichtung entlang einer Achse zueinander verschiebbar ausgeführt sind. Dies ermöglicht eine zusätzlich verbesserte Anpassbarkeit an die Werkstückgeometrie. Zudem kann diese Maßnahme das Ablegen oder Aufnehmen des Werkstücks prozesssicherer gestalten.

Die Greifvorrichtungen können aus dem Stand der Technik bekannte Greifer umfassen, z.B. Magnetgreifer oder Saug- bzw. Vakuumgreifer.

Weiters kann es auch es vorgesehen sein, dass die Greifvorrichtungen Zangengreifer umfassen, was bei einem Erfassen an den Werkstückenden vorteilhaft sein kann.

Die Blechbearbeitungsanlage kann verschiedene aus dem Stand der Technik bekannte Anlagen umfassen, z.B. eine Stanzvorrichtung, eine Biegepresse, eine Laserbearbeitungsanlage und weitere.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform einer Blechbearbeitungsanlage mit einem Fördermittel und einer Wendeeinheit in Schrägansicht;
- Fig. 2: eine des Fördermittels mit einer Ausführungsvariante einer Wendeeinheit in Draufsicht;
- Fig. 3: eine weitere Ausführungsform einer Wendeeinheit in Draufsicht;
- Fig. 4: A bis D die Ausführungsform der Wendeeinheit nach Fig. 3 in vereinfachter Darstellung, in Seitenansicht;
- Fig. 5: ein weiteres mögliches Ausführungsbeispiel der Wendeeinheit, in Draufsicht;
- Fig. 6: A bis D eine weitere Ausführungsform einer Wendeeinheit in Seitenansicht;
- Fig. 7: A bis D eine weitere mögliche Ausführungsvariante einer Wendeeinheit in Seitenansicht;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

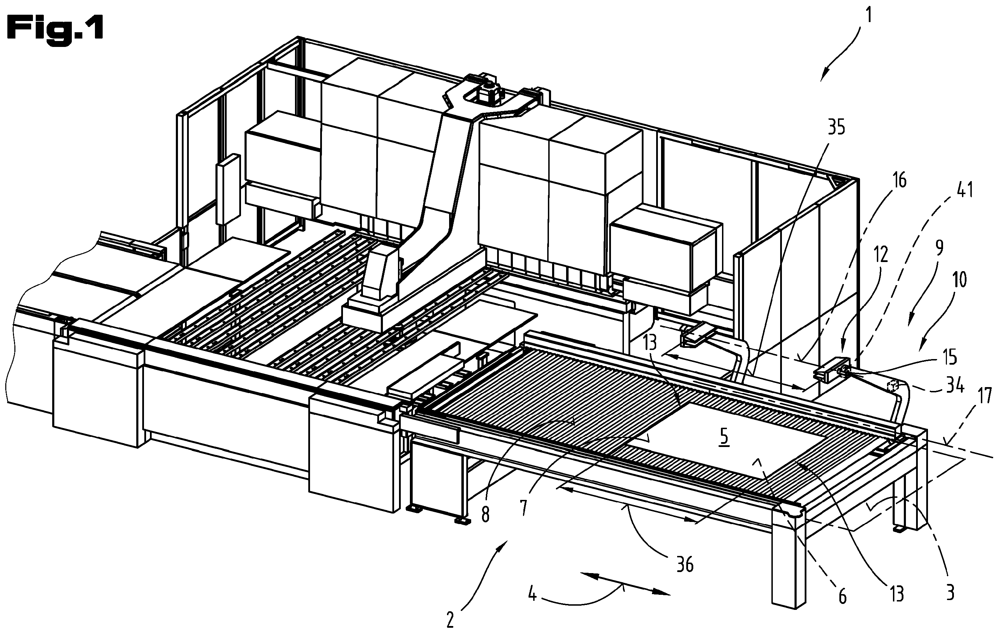

Weiters sei einführend angemerkt, dass die in den Figuren 1 bis 5, sowie Fig. 7 dargestellten Ausführungsformen der Wendeeinheiten 9 bzw. Manipulatoren 10 nicht unter dem Wortlaut der unabhängigen Ansprüche fallen, da sie nicht die gemäß dem Wortlaut der Ansprüche erste Greifvorrichtung und zweite Greifvorrichtung umfassen, diese Figuren jedoch in ihrer Gesamtheit bezüglich dem Verständnis der Erfindung als erleichternd angesehen werden.

Fig. 1 zeigt eine Ausführungsform einer Blechbearbeitungsanlage 1 mit einem Fördermittel 2 und einer Wendeeinheit 9 in Schrägansicht. Das Fördermittel 2 definiert eine Förderebene 3 und eine Förderrichtung 4, entlang dieser ein Werkstück 5 von bzw. zu einem Prozess der Blechbearbeitungsanlage 1 gefördert werden kann. Das Werkstück 5 weist eine Oberseite 7 und eine Unterseite 6 auf. Mit der Unterseite 6 liegt das Werkstück 5 auf der Aufnahmefläche 8 des Fördermittels 2 auf. Die Wendeeinheit 9 weist einen Manipulator 10 auf, welcher dazu ausgebildet ist, die Unterseite 6 des Werkstücks 5 von der Aufnahmefläche 8 abzuheben, einen Wendevorgang des Werkstücks 5 durchzuführen und die Oberseite 7 des Werkstücks 5 auf die Aufnahmefläche 8 des Fördermittels 2 abzulegen.

Die Ausführungsform des Manipulators 10 der Wendeeinheit 9 in Fig.1, welche nicht die gemäß dem Wortlaut der Ansprüche erste und zweite Greifvorrichtung umfasst, zeigt eine mögliche Ausführungsvariante des Manipulators 10 mit einer Greifvorrichtung 12, welche das Werkstück 5 an zwei einander gegenüberliegenden Werkstückenden 13 randseitig erfasst. Der Manipulator 10 ist um eine Achse 17 schwenkbar ausgebildet. Die Greifvorrichtung 12 umfasst einen Wendekopf 15, welcher zumindest um 180° mittels eines Wendeantriebs 41 um eine Wendeachse 16 schwenkbar ist. Die Greifvorrichtung 12 kann weiters Mittel 34 umfassen, wie strichliert angedeutet, welche eine Haltekraft der Greifvorrichtung 12 während des Wendevorgangs reduzieren bzw. deaktivieren können,, um das Werkstück 5 beim Ablegen auf die Aufnahmefläche 8 des Fördermittels 2 von der Greifvorrichtung 12 gleiten zu lassen. Für diese Ausgestaltung kann der Manipulator 10 teleskopartig ausgebildet sein, oder aber auch in einer Ebene parallel bezüglich der Förderebene 3 verfahrbar, um das Gleiten auf die Aufnahmefläche 8 zu ermöglichen.

Das Gleiten auf die Aufnahmefläche 8 kann aber auch derart erfolgen, indem die Greifvorrichtung 12 in Richtung der Aufnahmefläche 8 langsam geöffnet wird, wenn es sich z.B. um einen Zangengreifer handelt.

Der in Fig.1 gezeigte Manipulator 10 bzw. die Greifvorrichtung 12 können aber auch derart ausgebildet sein, dass sie entlang der Förderrichtung 4 verfahrbare oder teleskopierbare Teile aufweisen, sodass ein Abstand 35 der Greifvorrichtung 12 zur Aufnahme eine Werkstücks 5 an unterschiedliche Längen 36 von verschiedenen Werkstücken 5 anpassbar ist. Des Weiteren kann ein Ändern des Abstandes 35 das Gleiten des Werkstücks 5 von der Greifvorrichtung 12 ermöglichen.

Die Blechbearbeitungsanlage kann verschiedene aus dem Stand der Technik bekannte Anlagen umfassen, z.B. eine Stanzvorrichtung, eine Biegepresse oder auch eine Laserbearbeitungsanlage und weitere.

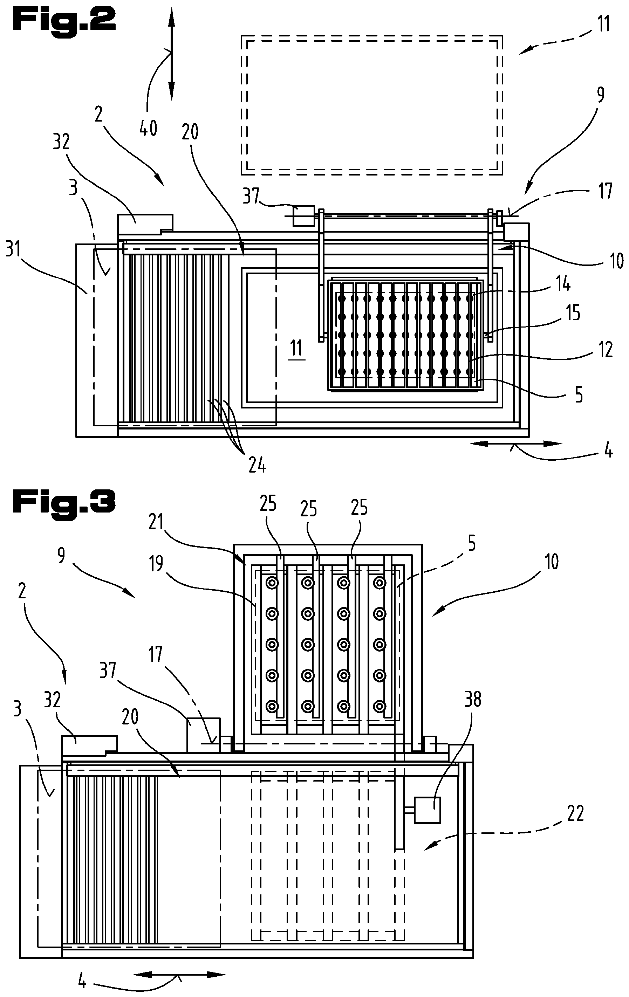

Die in Fig. 2 bis 4 dargestellte Ausführungsformen des Manipulators umfassen ebenfalls nicht die unter den Wortlaut der Ansprüche fallende erste und zweite Greifvorrichtung.

Fig. 2 zeigt eine mögliche Ausführungsform des Fördermittels 2 mit einer Ausführungsvariante einer Wendeeinheit 9 in Draufsicht, die nicht die unter dem Wortlaut der Ansprüche fallende erste und zweite Greifvorrichtung zeigt. Der Manipulator 10 ist um eine Schwenkachse 17 schwenkbar ausgebildet und umfasst eine Greifvorrichtung 12 mit einer Greiffläche 14 und einen Wendekopf 15. Hierbei sind zumindest Bestandsteile des Fördermittels 2 verschiebbar ausgebildet, sodass in der Förderebene 3 eine Zugangsöffnung 20 für den Manipulator 10 ausbildbar ist. Das Fördermittel 2 kann zum Beispiel einzelne Förderelemente 24 umfassen, welche mithilfe eines Förderantriebs 32 verfahrbar ausgebildet sind, und z.B. in einen Fördermittelspeicher 31 verfahren werden, um die Zugangsöffnung 20 zu bilden.

Unterhalb dieser Zugangsöffnung 20 ist ein Speicher 11 ausgebildet, welcher z.B. ein Werkstück 5 aufnehmen oder bereitstellen kann. Andernfalls kann der Speicher 11 auch zur Aufnahme einer Greifvorrichtung 12 dienen, um z.B. für unterschiedliche Geometrien des Werkstücks 5 die Greifvorrichtung 12 wechseln zu können, wenn diese koppelbar am Manipulator 10 ausgebildet ist. Ein Speicher 11 kann auch neben dem Fördermittel 2 angeordnet sein, wie in Fig. 2 strichliert angedeutet ist. Weiters kann der Speicher 11 auch verfahrbar ausgebildet sein. Mittels des Speichers kann ein Werkstück 5 z.B. auch erstmalig durch den Manipulator 10 aufgenommen und einem Prozess der Blechbearbeitungsanlage 1 über das Fördermittel 2 zugeführt werden. Hierbei sei angemerkt, dass der Speicher 11 unabhängig von der Ausführung des Fördermittels und der Wendeeinheit ausgebildet ist und in den folgenden Figuren ebenfalls Anwendung finden kann.

Weiters ist eine Antriebsvorrichtung 37 dargestellt, welche einen Schwenkantrieb für den Manipulator 10 umfassen kann. Zudem kann die Antriebsvorrichtung 37 Mittel umfassen, welche den Manipulator 10 entlang einer Horizontalrichtung 40 oder der Förderrichtung 4 zu verfahren.

Fig. 3 zeigt eine mögliche Ausführungsform einer Wendeeinheit 9 mit einem Manipulator 10 in Draufsicht, der keine erste und zweite Greifvorrichtung gemäß dem Wortlaut der Ansprüche umfasst, welcher mithilfe eines Antriebsvorrichtung 37 um eine Schwenkachse 17 schwenkbar ist, die parallel bezüglich der Förderrichtung 4 ist. Des Weiteren weist die Wendeeinheit 9 eine parallel bezüglich der Förderebene 3 des Fördermittels 2 angeordnete Ablage 19 auf, welche zwischen einer ersten Betriebsstellung 21 und einer zweiten Betriebsstellung 22 verfahrbar ist. Diese Ausgestaltung dient dazu, dass der Manipulator 10 das Werkstück 5 während des Wendevorgangs auf die Ablage 19 in der ersten Betriebsstellung 21 ablegt und in der zweiten Betriebsstellung 22 wieder aufnehmen kann.

Das Verfahren zwischen den Betriebsstellungen kann z.B. mithilfe eines Stellantriebs 38 erfolgen, wie in Fig.3 dargestellt.

Die Ablage 19 kann in der dargestellten Ausführungsvariante in die genannten Betriebsstellungen 21, 22 linear verfahren. Alternativ wäre es aber auch möglich, diese beispielsweise bogenförmig verfahrbar auszubilden, um das Werkstück 5 zusätzlich zum Wendevorgang in einer Ebene parallel bezüglich der Förderebene 3, um einen Winkel, z.B. um 180° zu drehen.

Der Manipulator 10, welcher nicht die erste und zweite Greifvorrichtung gemäß dem Wortlaut der Ansprüche umfasst, weist in dieser Ausführungsvariante einzelne Greifarme 25 auf, welche gemeinsam um die Schwenkachse 17 schwenkbar sind. Alternativ können die Greifarme 25 auch einzeln um die Achse 17 schwenkbar sein.

Hierbei sei erwähnt, dass die Ablage 19 und der Manipulator 10 derart ausgebildet sein müssen, sodass sie sich beim Wenden des Werkstücks 5 und Verfahren in die Betriebsstellungen 21, 22 nicht gegenseitig blockieren.

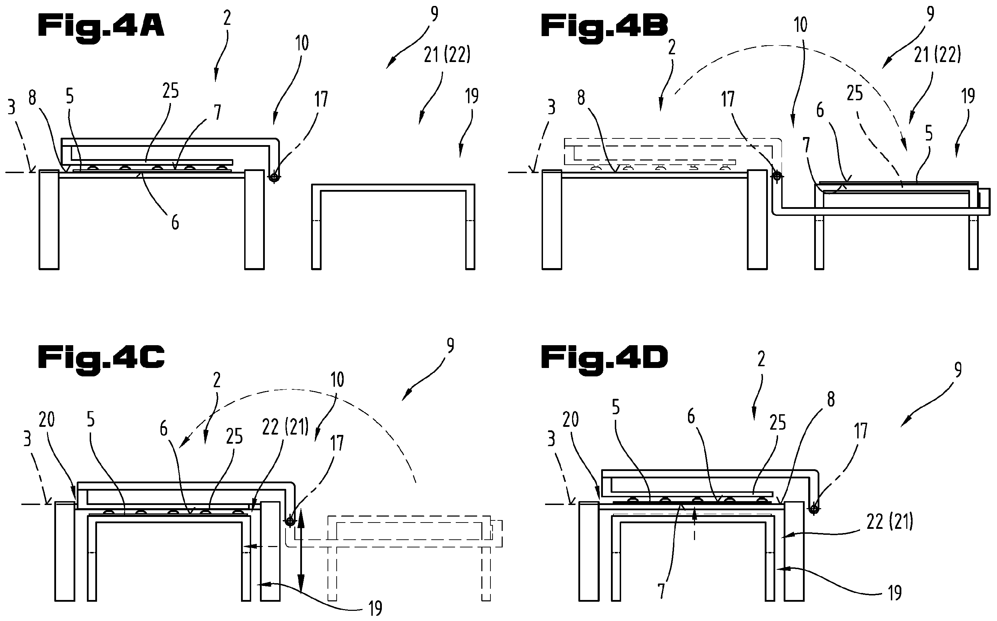

Fig. 4A bis 4D zeigen die Ausführungsform der Wendeeinheit 9 nach Fig. 3 vereinfachter Darstellung in Seitenansicht, sowie einen Wendevorgang und umfassen ebenfalls nicht die erste und zweite Greifvorrichtung gemäß dem Wortlaut der Ansprüche. Die Ablage 19 befindet sich in Fig. 4A in der ersten Betriebsstellung 21, während der Manipulator 10 mittels der Greifarme 25 die Unterseite 6 des Werkstücks 5 von der Aufnahmefläche 8 des Fördermittels 2 abhebt. Der Manipulator 10 schwenkt über die Schwenkachse 17 in Fig. 4B das Werkstück 5 mit der Oberseite 7 auf die Ablage 19 und verweilt unter dieser. Währenddessen wird im Fördermittel 2 die Zugangsöffnung 20 gebildet. Gemäß Fig. 4C fährt die Ablage 19 in die zweite Betriebsstellung 22, der Manipulator schwenkt über die Achse 17 zurück, erfasst das Werkstücks 5 an seiner Unterseite 6 durch die Zugangsöffnung 20 und hebt es von der Ablage 19.

Anschließend fördert der Manipulator das Werkstück 5 durch die Zugangsöffnung 20 über die Förderebene 3 des Fördermittels 2 und legt das Werkstück 5 mit seiner Oberseite 7 auf die Aufnahmefläche 8 des Fördermittels 2 wieder ab wie in Fig. 4D dargestellt. Hierbei sei erwähnt, dass zumindest Bestandsteile des Fördermittels 2 wieder dementsprechend verfahren werden, sodass die Zugangsöffnung 20 wieder geschlossen wird, um das Werkstück 5 aufnehmen zu können.

Alternativ lässt sich die hier beschriebene Reihenfolge natürlich auch umkehren, wie mit den Bezugszeichen in den Klammern angedeutet ist, sodass sich die Ablage 19 in seiner ersten Betriebsstellung 21 unter der Zugangsöffnung 20 befindet, der Manipulator das Werkstück 5 mit seiner Unterseite 6 von der Aufnahmefläche 8 abhebt, durch die Zugangsöffnung 20 auf die Ablage 19 ablegt, um die Schwenkachse 17 schwenkt, die Ablage 19 in ihre zweite Betriebsstellung 22 verfahren wird und der Manipulator 10 das Werkstück 5 an seiner Unterseite 6 erfasst, es über die Schwenkachse 17 schwenkt und anschließend mit seiner Oberseite 7 auf die Aufnahmefläche 8 des Fördermittels 2 ablegt.

In einer nicht gezeigten Ausführungsform ist es auch möglich, die Ablage mithilfe einer Aufhängung oder ähnlichem oberhalb der Förderebene des Fördermittels anzuordnen, wodurch die Notwendigkeit einer Zugangsöffnung entfallen würde.

Um einen eventuellen Höhenunterschied zwischen der Ablage 19 und der Förderebene 3 und eine daraus resultierende Neigung der Greifarme 25 des Manipulators 10 zu kompensieren, kann der Manipulator 10 oder die Ablage 19 bzw. Teile davon höhenverstellbar ausgeführt sein. Andernfalls kann auch ein Abstand der Schwenkachse 17 des Manipulators 10 zum Fördermittel dementsprechend groß ausgebildet werden, sodass der Neigungswinkel der Greifarme 25 bezüglich der Ablage 19 möglichst gering wird.

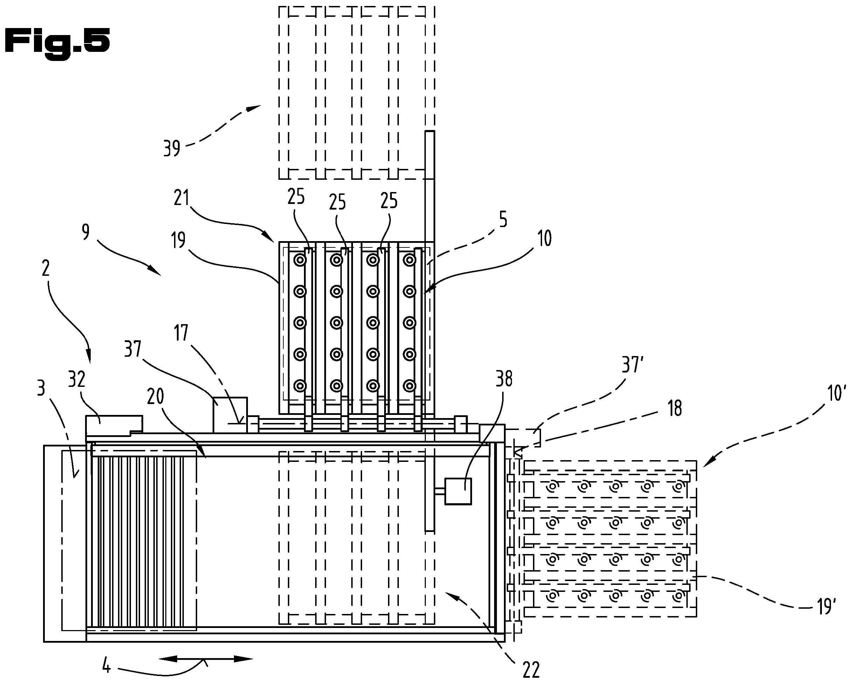

Fig. 5 zeigt eine andere Ausführung der Wendeeinheit 9 und des Manipulators 10 in Draufsicht dargestellt, welche nicht die unter den Wortlaut der Ansprüche fallende Wendeeinheit umfasst. Hierbei kann die Ablage 19 auch eine Zwischenstellung 39 umfassen, sodass sie zwischen den Betriebsstellungen 21, 22 beim Schwenken des Manipulators 10 aus dessen Schwenkradius verfahren kann, um eine Kollision zu vermeiden.

Weiters ist in Fig. 5 eine Achse 18 angedeutet, welche orthogonal bezüglich der Förderrichtung 4 und parallel bezüglich der Förderebene 3 angeordnet ist. Alternativ können der Manipulator 10' und die Ablage 19' derart angeordnet sein, dass der Manipulator 10' das Werkstück 5 um diese Achse 18 im Wendevorgang schwenkt, wie strichliert angedeutet ist. Des Weiteren kann die Ablage 19' auch nicht linear verfahrbar sein, sondern z.B. ein einem Radius.

In der Fig. 5 ist eine weitere und gegebenenfalls für sich eigenständige Ausführungsform der Wendeeinheit 9 gezeigt, die nicht unter den Wortlaut der Ansprüche fällt, wobei wiederum für gleiche Teile gleiche Bezugszeichen bzw. Bauteilbezeichnungen wie in den vorangegangenen Fig.3 und 4A bis 4D verwendet werden. Um unnötige Wiederholungen zu vermeiden, wird auf die detaillierte Beschreibung in den vorangegangenen Figuren hingewiesen bzw. Bezug genommen.

Unabhängig von der Ausführungsform der Wendeeinheit 9 in Fig. 5 können auch andere Ausführungen eines Manipulators 10 um eine orthogonal zur Förderrichtung 4 und parallel bezüglich der Förderebene 3 angeordnete Achse 18 schwenkbar ausgebildet sein.

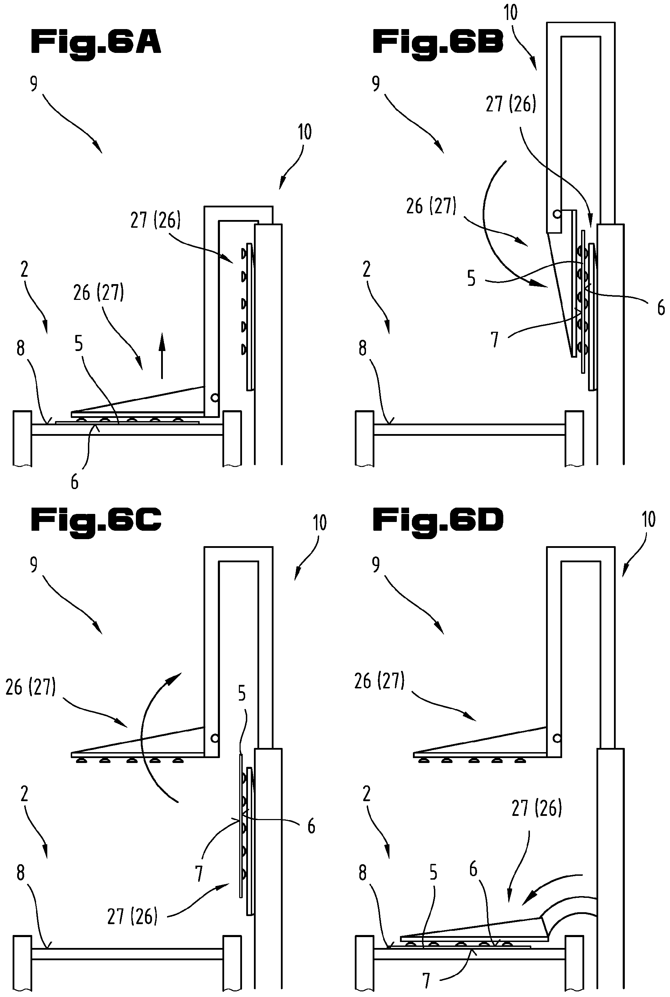

Fig. 6A bis 6D zeigen eine erfindungsgemäße Ausführungsform einer Wendeeinheit 9 in Seitenansicht in vereinfachter Darstellung, wobei der Manipulator 10 eine erste Greifvorrichtung 26 und eine zweite Greifvorrichtung 27 umfasst. Die erste Greifvorrichtung 26 ist dazu ausgebildet, die Unterseite 6 des Werkstücks 5 von der Aufnahmefläche 8 des Fördermittels 2 abzuheben, einen ersten Teilschritt des Wendevorgangs durchzuführen, das Werkstück 5 an die zweite Greifvorrichtung 27 zu übergeben, welche das Werkstück 5 von der ersten Greifvorrichtung 26 annimmt, an der Unterseite 6 erfasst, einen zweiten Teilschritt des Wendevorgangs durchführt und das Werkstück 5 mittels seiner Oberseite 7 auf die Aufnahmefläche 8 des Fördermittels 2 ablegt. Die hierbei beschriebenen Teilschritte des Wendevorgangs können beispielsweise wie dargestellt, jeweils einen Schwenkwinkel zu 90 ° umfassen, aber auch zwei unterschiedliche Schwenkwinkel, welche sich zu einem supplementären Winkel ergänzen. So kann z.B. der erste Schwenkwinkel 135° und der zweite 45° betragen.

Hierbei sei zur Vollständigkeit erwähnt, dass eine Haltekraft der ersten Greifvorrichtung bei der Übergabe an die zweite Greifvorrichtung deaktiviert wird, sobald das Werkstück übergeben wurde und die erste Greifvorrichtung derart verfahren bzw. verschwenkt werden muss, dass der Schwenkbereich der zweiten Greifvorrichtung nicht blockiert wird

Bei dieser Ausführungsform wäre es ebenfalls möglich, die Funktionen der beiden Greifvorrichtungen 26,27 umzukehren, wie mit den Bezugszeichen in Klammer angedeutet ist.

Weiters ist es möglich, die zwei Greifvorrichtungen unterschiedlich auszubilden, sodass eine Greifvorrichtung das Werkstück an einer Ober- oder Unterseite erfasst und die andere Greifvorrichtung das Werkstück beispielsweise randseitig erfasst.

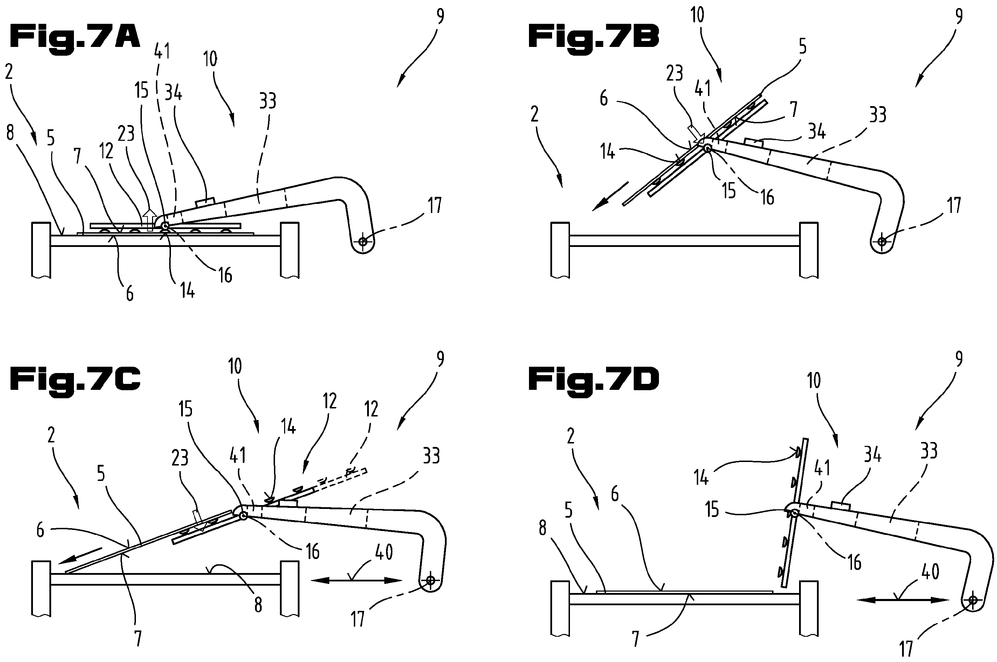

Fig. 7A bis 7D zeigen eine Ausführungsvariante einer Wendeeinheit 9 in Seitenansicht, die nicht die unter dem Wortlaut der Ansprüche fallende erste und zweite Greifvorrichtung umfasst, wobei der Manipulator 10 eine Greifvorrichtung 12 umfasst, welche dazu ausgebildet ist, das Werkstück 5 an der Oberseite 7 mit einer Greiffläche 14 zu erfassen. Weiters umfasst der Manipulator 10 Mittel 34, welche die Haltekraft 23 der Greifvorrichtung 12 im Wendevorgang reduzieren oder deaktivieren können. Die erwähnten Mittel 34 können je nach Ausbildung der Greifvorrichtung 12 unterschiedliche technische Anforderungen erfüllen. Bei einem Saug- oder Vakuumgreifer können diese Mittel beispielsweise einer Druckluftsteuerung, bzw. Unterdruckregelung umfassen, sowie bei einem Magnetgreifer eine Regelung des Magnetfeldes, bzw. bei Verwendung eines Dauermagneten auch pneumatisch, wie bereits eingangs erwähnt.

Des Weiteren umfasst die Greifvorrichtung 12 einen Wendekopf 15, welcher zumindest um 180° schwenkbar ausgebildet ist. Weiters ist ein Wendeantrieb 41 strichliert angedeutet, mittels dessen der Wendekopf 15 in die erforderliche Winkelstellung schwenkt.

In der gezeigten Ausführung ist der Manipulator 10 entlang der Horizontalrichtung 40 verfahrbar, sodass er das Werkstück 5 im Zuge des Wendevorgangs von der Greiffläche 14 gleiten lassen kann. Alternativ kann der Manipulator 10 auch einen Teleskoparm 33 umfassen, wie strichliert angedeutet. Ebenso könnte auch die Greifvorrichtung 12 dementsprechend verfahrbar ausgebildet sein wie in Fig. 7C angedeutet.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Blechbearbeitungsanlage | 31 | Fördermittelspeicher |
| 2 | Fördermittel | 32 | Förderantrieb |
| 3 | Förderebene | 33 | Teleskoparm |
| 4 | Förderrichtung | 34 | Mittel |
| 5 | Werkstück | 35 | Abstand |
| 6 | Unterseite | 36 | Länge |
| 7 | Oberseite | 37 | Antriebsvorrichtung |
| 8 | Aufnahmefläche | 38 | Stellantrieb |
| 9 | Wendeeinheit | 39 | Zwischenstellung |
| 10 | Manipulator | 40 | Horizontalrichtung |
| 11 | Speicher | 41 | Wendeantrieb |
| 12 | Greifvorrichtung | | |
| 13 | Werkstückenden | | |
| 14 | Greiffläche | | |
| 15 | Wendekopf | | |
| 16 | Wendeachse | | |
| 17 | Schwenkachse | | |
| 18 | Achse | | |
| 19 | Ablage | | |
| 20 | Zugangsöffnung | | |
| 21 | ersten Betriebsstellung | | |
| 22 | zweiten Betriebsstellung | | |
| 23 | Haltekraft | | |
| 24 | Förderelement | | |
| 25 | Greifarm | | |
| 26 | erste Greifvorrichtung | | |
| 27 | zweite Greifvorrichtung | | |
| 28 | erste Greifabschnitt | | |
| 29 | zweite Greifabschnitt | | |
| 30 | Drehachse | | |

## Patentansprüche

1. Blechbearbeitungsanlage (1) umfassend
- ein Fördermittel (2), welches Fördermittel (2) in einer Förderebene (3) eine Aufnahmefläche (8) für ein Werkstück (5) und eine Förderrichtung (4) definiert und zum Fördern des Werkstückes (5) ausgebildet ist, welches Werkstück (5) eine Unterseite (6) und eine Oberseite (7) aufweist,
- eine Wendeeinheit (9), welche Wendeeinheit (9) zum Wenden des auf der Aufnahmefläche (8) aufgenommenen Werkstückes (5) von der Unterseite (6) auf die Oberseite (7) ausgebildet ist,
- wobei die Wendeeinheit (9) einen Manipulator (10) umfasst, welcher Manipulator (10) dazu ausgebildet ist, die Unterseite (6) des Werkstückes (5) von der Aufnahmefläche (8) abzuheben, einen Wendevorgang des Werkstückes (5) durchzuführen und die Oberseite (7) des Werkstückes (5) auf die Aufnahmefläche (8) des Fördermittels (2) abzulegen,
**dadurch gekennzeichnet, dass** der Manipulator (10) eine erste Greifvorrichtung (26) und eine zweite Greifvorrichtung (27) umfasst, welche dazu ausgebildet sind, das Werkstück (5) während des Wendevorgangs von der ersten Greifvorrichtung (26) auf die zweite Greifvorrichtung (27) zu übergeben, wobei die zweite Greifvorrichtung (27) dazu ausgebildet ist, die Oberseite (7) des Werkstückes (5) auf die Aufnahmefläche (8) des Fördermittels (2) abzulegen.

2. Blechbearbeitungsanlage (1) nach Anspruch 1, **dadurch gekennzeichnet, dass** zumindest Bestandsteile des Fördermittels (2) derart verschiebbar ausgebildet sind, dass in der Förderebene (3) eine Zugangsöffnung (20) für den Manipulator (10) ausbildbar ist.

3. Blechbearbeitungsanlage (1) nach Anspruch 1 oder 2, **dadurch gekennzeichnet, dass** der Manipulator (10) eine Greifvorrichtung (12) umfasst, welche Greifvorrichtung (12) dazu ausgebildet ist, das Werkstück (5) an der Oberseite (7) mit einer Greiffläche (14) zu erfassen.

4. Blechbearbeitungsanlage (1) nach einem der vorhergehenden Ansprüche, **dadurch gekennzeichnet, dass** der Manipulator (10) eine Greifvorrichtung (12) umfasst, welche dazu ausgebildet ist, das Werkstück (5) an zwei einander gegenüberliegenden Werkstückenden (13) randseitig zu erfassen.

5. Blechbearbeitungsanlage (1) nach Anspruch 3 oder 4, **dadurch gekennzeichnet, dass** die Greifvorrichtung (12) zumindest einen Wendekopf (15) umfasst, welcher Wendekopf (15) zumindest um 180° schwenkbar ausgebildet ist.

6. Blechbearbeitungsanlage (1) nach einem der vorhergehenden Ansprüche, **dadurch gekennzeichnet, dass** der Manipulator (10) um eine Schwenkachse (17) schwenkbar ausgebildet ist, welche Schwenkachse (17) parallel bezüglich der Förderrichtung (4) angeordnet ist.

7. Blechbearbeitungsanlage (1) nach einem der vorhergehenden Ansprüche, **dadurch gekennzeichnet, dass** der Manipulator (10) um eine Achse (18) schwenkbar ausgebildet ist, welche Achse (18) parallel bezüglich der Förderebene (3) und orthogonal bezüglich der Förderrichtung (4) angeordnet ist.

8. Verfahren zum Wenden von Blechen, für eine Blechbearbeitungsanlage (1), insbesondere für eine Blechbearbeitungsanlage (1) nach Anspruch 1 bis 7, umfassend folgende Schritte
- Bereitstellen einer Blechbearbeitungsanlage (1),
- Bereitstellen eines Fördermittels (2), welches Fördermittel (2) in einer Förderebene (3) eine Aufnahmefläche (8) für ein Werkstück (5) und eine Förderrichtung (4) definiert und zum Fördern des Werkstückes (5) ausgebildet ist, welches Werkstück (5) eine Unterseite (6) und eine Oberseite (7) aufweist,
- Bereitstellen eines Werkstücks (5) auf der Aufnahmefläche (8) des Fördermittels (2),
- Bereitstellen einer Wendeeinheit (9), welche Wendeeinheit (9) zum Wenden des auf der Aufnahmefläche (8) aufgenommen Werkstückes (5) von der Unterseite (6) auf die Oberseite (7) ausgebildet ist,
- wobei die Wendeeinheit (9) einen Manipulator (10) umfasst, welcher Manipulator (10) die Unterseite (6) des Werkstückes (5) von der Aufnahmefläche (8) abhebt, einen Wendevorgang des Werkstückes (5) durchführt und die Oberseite (7) des Werkstückes (5) auf die Aufnahmefläche (8) des Fördermittels (2) ablegt,
**dadurch gekennzeichnet, dass** der Manipulator (10) eine erste Greifvorrichtung (26) und eine zweite Greifvorrichtung (27) umfasst, wobei mittels der ersten Greifvorrichtung (26) die Unterseite (6) des Werkstückes (5) von der Aufnahmefläche (8) abgehoben wird und ein erster Teilschritt des Wendevorganges durchgeführt wird, das Werkstück (5) von der ersten Greifvorrichtung (26) an die zweite Greifvorrichtung (27) übergeben und von dieser angenommen wird, ein zweiter Teilschritt des Wendevorganges durchgeführt wird und die Oberseite (7) des Werkstückes (5) mittels der zweiten Greifvorrichtung (27) auf die Aufnahmefläche (8) des Fördermittels (2) abgelegt wird.

9. Verfahren nach Anspruch 8, **dadurch gekennzeichnet, dass** ein Speicher (11) bereitgestellt wird, welcher unterhalb der Förderebene (3) des Fördermittels (2) positioniert ist.

10. Verfahren nach Anspruch 8 oder 9, **dadurch gekennzeichnet, dass** im Fördermittel (2) eine Zugangsöffnung (20) für den Manipulator (10) in der Förderebene (3) ausgebildet wird, und dabei zumindest Bestandsteile des Fördermittels (2) verschoben werden.

11. Verfahren nach einem der Ansprüche 8 bis 10, **dadurch gekennzeichnet, dass** das Bereitstellen des Werkstückes (5) mittels des Manipulators (10) erfolgt, wobei das Werkstück (5) mittels des Manipulators (10) vom Speicher (11) abgehoben und auf die Aufnahmefläche (8) des Fördermittels (2) abgelegt wird

12. Verfahren nach einem der Ansprüche 8 bis 11, **dadurch gekennzeichnet, dass** der Manipulator (10) eine Greifvorrichtung (12) mit einer Greiffläche (14) umfasst und das Werkstück (5) an der Oberseite (7) mit der Greiffläche (14) erfasst wird.

13. Verfahren nach einem der Ansprüche 8bis 11, **dadurch gekennzeichnet, dass** der Manipulator (10) eine Greifvorrichtung (12) umfasst, und das Werkstück (5) von der Greifvorrichtung (12) an zwei einander gegenüberliegenden Werkstückenden (13) randseitig erfasst wird.

14. Verfahren nach Anspruch 12 oder 13, **dadurch gekennzeichnet, dass** die Greifvorrichtung (12) zumindest einen Wendekopf (15) umfasst, welcher zumindest um 180° schwenkbar ausgebildet ist und die Greifvorrichtung (12) mit dem Werkstück (5) im Wendevorgang zumindest teilweise um eine Wendeachse (16) gewendet wird.

15. Verfahren nach einem der Ansprüche 8 bis 14, **dadurch gekennzeichnet, dass** der Manipulator (10) weiters Mittel (34) umfasst, mittels derer eine Haltekraft (23) der Greifvorrichtung (12) während des Wendevorgangs zumindest reduziert wird und dass bei reduzierter Haltekraft (23) das Werkstück (5) beim Ablegen auf die Aufnahmefläche (8) des Fördermittels (2) von der Greifvorrichtung (12) gleitet.

## Claims

1. A sheet metal processing plant (1) comprising
- a conveying means (2), said conveying means (2) defining a receiving surface (8) for a workpiece (5) and a conveying direction (4) in a conveying plane (3) and being embodied for conveying the workpiece (5), said workpiece (5) having a bottom side (6) and a top side (7),
- a turning unit (9), said turning unit (9) being embodied for turning the workpiece (5) received on the receiving surface (8) from the bottom side (6) to the top side (7),
- wherein the turning unit (9) comprises a manipulator (10), said manipulator (10) being embodied to lift the bottom side (6) of the workpiece (5) off the receiving surface (8), to perform a turning operation of the workpiece (5) and to place the top side (7) of the workpiece (5) on the receiving surface (8) of the conveying means (2), **characterized in that** the manipulator (10) comprises a first gripping device (26) and a second gripping device (27) embodied to transfer the workpiece (5) from the first gripping device (26) to the second gripping device (27) during the turning operation, wherein the second gripping device (27) is embodied to place the top side (7) of the workpiece (5) on the receiving surface (8) of the conveying means (2).

2. The sheet metal processing plant (1) according to claim 1, **characterized in that** at least parts of the conveying means (2) are embodied to be displaceable such that in the conveying plane (3), an access opening (20) for the manipulator (10) can be formed.

3. The sheet metal processing plant (1) according to claim 1 or 2, **characterized in that** the manipulator (10) comprises a gripping device (12), said gripping device (12) being embodied to grip the workpiece (5) on the top side (7) with a gripping surface (14).

4. The sheet metal processing plant (1) according to one of the preceding claims, **characterized in that** the manipulator (10) comprises a gripping device (12) which is embodied to grip the workpiece (5) on the edges of two opposite workpiece ends (13).

5. The sheet metal processing plant (1) according to claim 3 or 4, **characterized in that** the gripping device (12) comprises at least one turning head (15), said turning head (15) being embodied to be pivotable at least by 180°.

6. The sheet metal processing plant (1) according to one of the preceding claims, **characterized in that** the manipulator (10) is embodied being pivotable about a pivot axis (17), said pivot axis (17) being arranged in parallel with respect to the conveying direction (4).

7. The sheet metal processing plant (1) according to one of the preceding claims, **characterized in that** the manipulator (10) is embodied being pivotable about an axis (18), said axis (18) being arranged in parallel with respect to the conveying plane (3) and orthogonally with respect to the conveying direction (4).

8. A method for turning metal sheets for a sheet metal processing plant (1), in particular for a sheet metal processing plant (1) according to claim 1 to 7, comprising the following steps
- providing a sheet metal processing plant (1),
- providing a conveying means (2), said conveying means (2) defining a receiving surface (8) for a workpiece (5) and a conveying direction (4) in a conveying plane (3) and being embodied for conveying a workpiece (5), said workpiece (5) having a bottom side (6) and a top side (7),
- providing a workpiece (5) on the receiving surface (8) of the conveying means (2),
- providing a turning unit (9), said turning unit (9) being embodied to turn the workpiece (5) received on the receiving surface (8) from the bottom side (6) to the top side (7),
- wherein the turning unit (9) comprises a manipulator (10) which manipulator (10) lifts the bottom side (6) of the workpiece (5) off the receiving surface (8), carries out a turning operation of the workpiece (5) and places the top side (7) of the workpiece (5) on the receiving surface (8) of the conveying means (2),
**characterized in that** the manipulator (10) comprises a first gripping device (26) and a second gripping device (27), wherein by means of the first gripping device (26), the bottom side (6) of the workpiece (5) is lifted off the receiving surface (8) and a first partial step of the turning operation is performed, the workpiece (5) is transferred from the first gripping device (26) to the second gripping device (27) and received by it, a second partial step of the turning operation is performed and the top side (7) of the workpiece (5) is placed on the receiving surface (8) of the conveying means (2) by means of the second gripping device (27).

9. The method according to claim 8, **characterized in that** a storage (11) is provided, which is positioned below the conveying plane (3) of the conveying means (2).

10. The method according to claim 8 or 9, **characterized in that** in the conveying means (2), an access opening (20) for the manipulator (10) is formed in the conveying plane (3), and, in this regard, at least parts of the conveying means (2) are displaced.

11. The method according to one of claims 8 to 10, **characterized in that** providing the workpiece (5) is carried out by means of the manipulator (10), wherein the workpiece (5) is lifted off the storage (11) and is placed on the receiving surface (8) of the conveying means (2) by means of the manipulator (10).

12. The method according to one of claims 8 to 11, **characterized in that** the manipulator (10) comprises a gripping device (12) with a gripping surface (14) and the workpiece (5) is gripped on the top side (7) with the gripping surface (14).

13. The method according to one of claims 8 to 11, **characterized in that** the manipulator (10) comprises a gripping device (12), and the workpiece (5) is gripped on the edges of two opposite workpiece ends (13) by the gripping device (12).

14. The method according to claim 12 or 13, **characterized in that** the gripping device (12) comprises at least one turning head (15), which is embodied to be pivotable by at least 180° and the gripping device (12) is turned at least partially about a turning axis (16) with the workpiece (5) in the turning operation.

15. The method according to one of claims 8 to 14, **characterized in that** the manipulator (10) further comprises means (34) by which a holding force (23) of the gripping device (12) is at least reduced during the turning operation and that when the holding force (23) is reduced, the workpiece (5) slides off the gripping device (12) when it is placed on the receiving surface (8) of the conveying means (2).

## Revendications

1. Installation d'usinage de tôles (1) comprenant :
un moyen de convoyage (2), lequel moyen de convoyage (2) définit, dans un plan de convoyage (3), une surface de réception (8) pour une pièce à usiner (5) et une direction de convoyage (4) et est conçu pour transporter la pièce à usiner (5), laquelle pièce à usiner (5) présente une face inférieure (6) et une face supérieure (7),
une unité de retournement (9), laquelle unité de retournement (9) est conçue pour retourner la pièce à usiner (5) reçue sur la surface de réception (8) de la face inférieure (6) vers la face supérieure (7),
l'unité de retournement (9) comprenant un manipulateur (10), lequel manipulateur (10) est conçu pour soulever la face inférieure (6) de la pièce à usiner (5) de la surface de réception (8), effectuer une opération de retournement de la pièce à usiner (5) et déposer la face supérieure (7) de la pièce à usiner (5) sur la surface de réception (8) du moyen de convoyage (2), **caractérisée en ce que en ce que** le manipulateur (10) comprend un premier dispositif de préhension (26) et un deuxième dispositif de préhension (27) qui sont conçus pour transférer la pièce à usiner (5) du premier dispositif de préhension (26) vers le deuxième dispositif de préhension (27) pendant le processus de retournement, le deuxième dispositif de préhension (27) étant conçu pour déposer la face supérieure (7) de la pièce à usiner (5) sur la surface de réception (8) du moyen de convoyage (2).

2. Installation d'usinage de tôles (1) selon la revendication 1, **caractérisée en ce qu'**au moins des composants du moyen de convoyage (2) est conçu de manière à pouvoir être déplacé de telle sorte qu'une ouverture d'accès (20) pour le manipulateur (10) peut être formée dans le plan de convoyage (3).

3. Installation d'usinage de tôles (1) selon la revendication 1 ou 2, **caractérisée en ce que** le manipulateur (10) comprend un dispositif de préhension (12), lequel dispositif de préhension (12) est conçu pour saisir la pièce à usiner (5) sur la face supérieure (7) à l'aide d'une surface de préhension (14).

4. Installation d'usinage de tôles (1) selon l'une des revendications précédentes, **caractérisée en ce que** le manipulateur (10) comprend un dispositif de préhension (12) qui est conçu pour saisir la pièce à usiner (5) au niveau des bords de deux extrémités opposées (13) de la pièce.

5. Installation d'usinage de tôles (1) selon la revendication 3 ou 4, **caractérisée en ce que** le dispositif de préhension (12) comprend au moins une tête de retournement (15), laquelle tête de retournement (15) est conçue de manière à pouvoir pivoter d'au moins 180°.

6. Installation d'usinage de tôles (1) selon l'une des revendications précédentes, **caractérisée en ce que** le manipulateur (10) est conçu de manière à pouvoir pivoter autour d'un axe de pivotement (17), lequel axe de pivotement (17) est agencé parallèlement à la direction de convoyage (4).

7. Installation d'usinage de tôles (1) selon l'une des revendications précédentes, **caractérisée en ce que** le manipulateur (10) est conçu de manière à pouvoir pivoter autour d'un axe (18), lequel axe (18) est agencé parallèlement au plan de convoyage (3) et orthogonalement à la direction de convoyage (4).

8. Procédé pour retourner des tôles pour une installation d'usinage de tôles (1), en particulier pour une installation d'usinage de tôles (1) selon la revendication 1 à 7 comprenant les étapes suivantes :
- mise à disposition d'une installation d'usinage de tôles (1),
- mise à disposition d'un moyen de convoyage (2), lequel moyen de convoyage (2) définit, dans un plan de convoyage (3), une surface de réception (8) pour une pièce à usiner (5) et une direction de convoyage (4) et est conçu pour transporter la pièce à usiner (5), laquelle pièce à usiner (5) présente une face inférieure (6) et une face supérieure (7),
- mise à disposition d'une pièce à usiner (5) sur la surface de réception (8) du moyen de convoyage (2),
- mise à disposition d'une unité de retournement (9), laquelle unité de retournement (9) est conçue pour retourner la pièce à usiner (5) reçue sur la surface de réception (8) de la face inférieure (6) vers la face supérieure (7),
- l'unité de retournement (9) comprenant un manipulateur (10), le manipulateur (10) soulevant la face inférieure (6) de la pièce à usiner (5) de la surface de réception (8), effectuant une opération de retournement de la pièce à usiner (5) et déposant la face supérieure (7) de la pièce à usiner (5) sur la surface de réception (8) du moyen de convoyage (2),
**caractérisée en ce que en ce que** le manipulateur (10) comprend un premier dispositif de préhension (26) et un deuxième dispositif de préhension (27), le premier dispositif de préhension (26) soulevant la face inférieure (6) de la pièce à usiner (5) de la surface de réception (8) et une première étape partielle de l'opération de retournement est effectuée, la pièce à usiner (5) est transférée du premier dispositif de préhension (26) au deuxième dispositif de préhension (27) et est réceptionnée par celui-ci, une deuxième étape partielle du processus de retournement est effectuée et la face supérieure (7) de la pièce à usiner (5) est déposée au moyen du deuxième dispositif de préhension (27) sur la surface de réception (8) du moyen de convoyage (2).

9. Procédé selon la revendication 8, **caractérisé en ce qu'**un dispositif de stockage (11) est prévu, qui est positionné en dessous du plan de convoyage (3) du moyen de convoyage (2).

10. Procédé selon la revendication 8 ou 9, **caractérisé en ce qu'**une ouverture d'accès (20) pour le manipulateur (10) est formée dans le moyen de convoyage (2) au niveau du plan de convoyage (3), et ce en déplaçant au moins des composants du moyen de convoyage (2).

11. Procédé selon l'une des revendications 8 à 10, **caractérisé en ce que** le la mise à disposition de la pièce à usiner (5) s'effectue au moyen du manipulateur (10), la pièce à usiner (5) étant soulevée du dispositif de stockage (11) au moyen du manipulateur (10) et déposée sur la surface de réception (8) du moyen de convoyage (2).

12. Procédé selon l'une des revendications 8 à 11, **caractérisé en ce que** le manipulateur (10) comprend un dispositif de préhension (12) avec une surface de préhension (14) et que la pièce à usiner (5) est saisie sur la face supérieure (7) avec la surface de préhension (14).

13. Procédé selon l'une des revendications 8 à 11, **caractérisé en ce que** le manipulateur (10) comprend un dispositif de préhension (12) et que la pièce à usiner (5) est saisie par le dispositif de préhension (12) au niveau des bords de deux extrémités opposées (13) de la pièce.

14. Procédé selon la revendication 12 ou 13, **caractérisé en ce que** le dispositif de préhension (12) comprend au moins une tête de retournement (15) qui est conçue de manière à pouvoir pivoter d'au moins 180° et que le dispositif de préhension (12) avec la pièce à usiner (5) est retourné au moins partiellement autour d'un axe de retournement (16) pendant le processus de retournement.

15. Procédé selon l'une des revendications 8 à 14, **caractérisé en ce que** le manipulateur (10) comprend en outre des moyens (34) permettant de réduire au moins la force de maintien (23) du dispositif de préhension (12) pendant le processus de retournement et **en ce que**, lorsque la force de maintien (23) est réduite, la pièce à usiner (5) glisse du dispositif de préhension (12) lorsqu'elle est déposée sur la surface de réception (8) du moyen de convoyage (2).
